# EUROPEAN PATENT APPLICATION

(11) **EP 4 328 863 A1**
(43) Date of publication of application: **28.02.2024**
(21) Application number: 22871072.9
(22) Date of filing: 01.09.2022
(51) Int. Cl.: G06T 13/40, G06T 15/00, G06T 19/20

(54) **3D IMAGE IMPLEMENTATION METHOD AND SYSTEM**

(30) Priority: 11.07.2022 CN 202210814010
(71) Applicant: Shanghai Hode Information Technology Co., Ltd., Shanghai 200120 (CN)
(72) Inventor: LIU, Hongwei, Shanghai 200120 (CN)
(74) Representative: Ostertag & Partner Patentanwälte mbB
(86) International application number: PCT/CN2022/116577
(87) International publication number: WO 2024/011733

(57) **Abstract**

The present application discloses a method for implementing a 3D image, including: defining a newly added attribute in an attribute extension field of a target formatted file associated with a target format compatible with glTF format, the target format being obtained by defining extension field information of the glTF format; generating a 3D image based on the target formatted file; and implementing, based on the newly added attribute in the target formatted file, a newly added effect/function supported by the 3D image. According to the technical solutions provided in the present application, a good cross-platform capability and ecological support of the glTF format are inherited, and the newly added attribute is provided in the attribute extension field, which may meet requirements of application in various scenarios.

## Description

The present application claims priority to Chinese Patent Application No. 202210814010.3, filed on July 11, 2022 and entitled "METHOD AND SYSTEM FOR IMPLEMENTING 3D IMAGE", which is incorporated herein by reference in its entirety.

### Technical Field

The present application relates to the field of computers, and in particular, to a method and system for implementing a 3D image, a computer device, and a computer-readable storage medium.

### Background Art

With the development of computer technologies, three-dimensional images are more and more favored by the majority of users. Therefore, a 3D model format was proposed and widely used in various scenarios such as live streaming and games to implement various 3D visualizing designs. However, the inventors realized that a cross-platform capability of an existing 3D model format cannot meet requirements of application in various scenarios.

### Summary

An objective of embodiments of the present application is to provide a method and system for implementing a 3D image, a computer device, and a computer-readable storage medium, to solve the above problems.

An aspect of the embodiments of the present application provides a method for implementing a 3D image, including:
defining a newly added attribute in an attribute extension field of a target formatted file associated with a target format compatible with glTF format, where the target format is obtained by defining extension field information of the glTF format;
generating a 3D image based on the target formatted file; and
implementing, based on the newly added attribute in the target formatted file, a newly added effect/function supported by the 3D image.

Optionally, the newly added attribute includes:
an attribute defined in the extension field to be pointed to by a node;
an attribute defined in the extension field, to which no node points; and/or
an attribute defined in a node.

Optionally, defining the newly added attribute in the attribute extension field of the target formatted file includes:
defining an audio file attribute in the attribute extension field to be pointed to by a node,
where the audio file attribute is used to provide file information of an audio segment for restoration of the audio segment.

Optionally, the audio file attribute includes:
a uniform resource identifier used to indicate an index position of the audio file;
a media resource type used to indicate a supported audio format; and
a buffer view used to indicate an index position of the audio segment,
where if the target formatted file is exported as a .gltf file, the uniform resource identifier provides the index position; or if the target formatted file is exported as a .glb file, the buffer view provides the index position.

Optionally, defining the newly added attribute in the attribute extension field of the target formatted file further includes:
defining an audio behavior attribute in the attribute extension field,
where the audio behavior attribute includes one or more playing parameters for controlling playing of the audio segment.

Optionally, defining the newly added attribute in the attribute extension field of the target formatted file includes:
defining an expression transformation attribute in the attribute extension field to be pointed to by a node,
where the expression transformation attribute includes material information and expression file information used to set a mesh blend shape.

Optionally, defining the newly added attribute in the attribute extension field of the target formatted file includes:
defining a collider attribute in the attribute extension field to be pointed to by a node,
where the collider attribute includes one or more parameters for a collider that are used to support collision interaction.

Optionally, defining the newly added attribute in the attribute extension field of the target formatted file includes:
defining a humanoid bone attribute in the attribute extension field of the node to be pointed to by the node,
where the humanoid bone attribute includes parameters of a plurality of humanoid bones and a relationship and action constraints between the humanoid bones.

Optionally, defining the newly added attribute in the attribute extension field of the target formatted file includes:
defining a cloth changing attribute in the attribute extension field of the node to be pointed to by the node,
where the cloth changing attribute includes a list of different cloth changing solutions and
a material parameter list of each cloth changing solution.

Optionally, defining the newly added attribute in the attribute extension field of the target formatted file includes:
defining a lightmap attribute in the attribute extension field,
where the lightmap attribute is used to instruct an engine to pre-calculate a change in brightness of surfaces in a scene.

Optionally, defining the newly added attribute in the attribute extension field of the target formatted file includes:
defining a metadata attribute in the attribute extension field,
where the metadata attribute includes resource description information, resource management information, and legal information and/or content reference information.

Optionally, defining the newly added attribute in the attribute extension field of the target formatted file includes:
defining a bone dynamics attribute in the attribute extension field to be pointed to by a node,
where the bone dynamics attribute is used to support simulating dynamic motion of an object to which bones are bound.

Optionally, defining the newly added attribute in the attribute extension field of the target formatted file includes:
defining a post-processing attribute in the attribute extension field,
where the post-processing attribute includes an attribute of a volume component and an attribute of a supported post-processing effect.

Optionally, defining the newly added attribute in the attribute extension field of the target formatted file includes:
defining a dynamic script attribute in the attribute extension field,
where the dynamic script attribute includes a character string to be executed by an engine to support interpreting and running an external script.

Optionally, defining the newly added attribute in the attribute extension field of the target formatted file includes:
defining a rendering attribute for a scene in the attribute extension field,
where the rendering attribute for the secne includes one or more rendering effect parameters for affecting the scene.

Optionally, defining the newly added attribute in the attribute extension field of the target formatted file includes: defining a skybox attribute in the attribute extension field,
where the skybox attribute is used to instruct an engine to create a background to color a material to be pointed to.

Optionally, the method further includes:
defining a cubemap attribute in the attribute extension field which is used as a map type to be pointed to in a material,
where the cubemap attribute includes a layout, texture mapping, and texture of each side of a cubemap.

Optionally, defining the newly added attribute in the attribute extension field of the target formatted file includes:
defining a story timeline attribute in the attribute extension field to be pointed to by a node,
where the story timeline attribute is used to arrange a track of an object and create a cutscene and a game sequence.

Optionally, defining the newly added attribute in the attribute extension field of the target formatted file includes:
defining a sprite attribute in the attribute extension field to be pointed to by a node,
where the sprite attribute includes a layout, texture reference, a texture position, a border, a physical shape and/or a spatial position.

Optionally, the target formatted file includes a node.
the method further includes:
defining a streaming media attribute in the node,
where the streaming media attribute includes a URL name, a URL address, and a streaming media format of streaming media.

Optionally, the target formatted file includes a node.
The method further includes:
defining a resource variable attribute in the node,
where the resource variable attribute includes a variable type and a set of indexes pointing to reference fields to support the use of resources.

Optionally, the method further includes:
defining an import mode and an export mode,
where the export mode is used to define an export of a provided material parameter and/or an export of a provided component parameter.

Optionally, the method further includes:
defining some non-common parameters in an attribute extras field which is mounted to a node or mounted to an object.

An aspect of the embodiments of the present application further provides a system for implementing a 3D image, including:
a defining means configured to define a newly added attribute in an attribute extension field of a target formatted file associated with a target format compatible with glTF format,
where the target format is obtained by defining extension field information of the glTF format;
a generation means configured to generate a 3D image based on the target formatted file; and
an implementation means configured to implement, based on the newly added attribute in the target formatted file, a newly added effect/function supported by the 3D image.

An aspect of the embodiments of the present application further provides a computer device, the computer device including a memory, a processor, and computer-readable instructions stored on the memory and executable on the processor, where when executing the computer-readable instructions, the processor implements the steps of the above method for implementing a 3D image.

An aspect of the embodiments of the present application further provides a computer-readable storage medium storing computer-readable instructions that may be executed by at least one processor to cause the at least one processor to execute the steps of the above method for implementing a 3D image.

The method and system for implementing a 3D image, the computer device, and the computer-readable storage medium provided in the embodiments of the present application have the following advantages:
(1) The target format is developed based on the glTF format and inherits a good cross-platform capability and ecological support of the glTF format. In other words, a new format is created while enhancing the capability of the glTF format and controlling the extensibility of the glTF format, so as to meet service requirements.
(2) The newly added attribute is provided in the attribute extension field, and requirements of application in various scenarios may be met based on the newly added attribute.

### Brief Description of the Drawings

FIG. 1 is a diagram schematically showing an application environment of a method for implementing a 3D image according to an embodiment of the present application;
FIG. 2 is a flowchart schematically showing a method for implementing a 3D image according to Embodiment 1 of the present application;
FIG. 3 to FIG. 14 each are a flowchart of sub-steps of step S200 in FIG. 2;
FIG. 15 and FIG. 16 each are a flowchart schematically showing newly added steps of a method for implementing a 3D image according to Embodiment 1 of the present application;
FIG. 17 to FIG. 20 each are a flowchart of sub-steps of step S200 in FIG. 2;
FIG. 21 is a flowchart schematically showing newly added steps of a method for implementing a 3D image according to Embodiment 1 of the present application;
FIG. 22 is a block diagram schematically showing a system for implementing a 3D image according to Embodiment 2 of the present application; and
FIG. 23 is a schematic diagram schematically showing a hardware architecture of a computer device adapted to implement a method for implementing a 3D image according to Embodiment 3 of the present application.

### Detailed Description of Embodiments

To make the objectives, technical solutions, and advantages of the present application clearer and more comprehensible, the present application will be further described in detail with reference to the accompanying drawings and embodiments. It should be understood that the specific embodiments described herein are merely intended to explain the present application, and are not intended to limit the present application. All other embodiments obtained by those of ordinary skill in the art based on the embodiments of the present application without creative efforts shall fall within the protection scope of the present application.

It should be noted that the descriptions related to "first", "second", and the like in the embodiments of the present application are merely used for the illustrative purpose, and should not be construed as indicating or implying the relative importance thereof or implicitly indicating the number of technical features indicated. Thus, features defined with "first" and "second" may explicitly or implicitly include at least one of the features. In addition, technical solutions of various embodiments can be combined with each other, but they must be based on the implementation by those of ordinary skill in the art. When a combination of technical solutions is contradictory or cannot be implemented, it should be considered that such a combination of the technical solutions neither exists, nor falls within the protection scope claimed by the present application.

In the description of the present application, it should be understood that, the reference numerals of steps do not indicate the order of execution of the steps, but are merely to facilitate the description of the present application and differentiation between the steps, and thus will not be interpreted as limiting the present application.

To facilitate those skilled in the art to understand the technical solutions provided in the embodiments of the present application, the related technologies are described below:
Several currently known 3D file formats are FBX, DAZ, USD, AssetBundle, Pak, MMD, VRM, and the like.

FBX, DAZ, USD, and other formats cannot be loaded at runtime. Using these formats requires intermediate data to be generated in advance in a game engine for runtime rendering, and these formats cannot be directly used as a transmission carrier to be provided for a client, but are more applicable to be used as a production tool rather than a consumption carrier and can only be used by professional tools in professional fields as a productivity medium.

AssetBundle, Pak, and other formats are strongly bound to an engine version, and upgrading the engine version may cause all resources to be repackaged. As a result, these formats are not applicable to products with creations of players as creative themes. These formats are strongly correlated with operating systems, and resource packs for different platforms are not interchangeable and need to be respectively generated; they cannot be propagated and traded as independent resources, and cannot be assigned the value of virtual assets; and they cannot be exported at runtime, cannot be re-created and modified, and resources cannot be reused.

The MMD (MikuMikuDance) format is used for 3D animated movie scenes, and only supports exporting videos as projects in exclusive tools. It has commercial licensing restrictions, and has no ecological chain to support its application in games or virtual YouTuber (vTuber, a virtual uploader).

The VRM format is used in virtual live streaming and social VR games, but it contains only data of the character part, cannot be extended to be applicable to a larger usage scenario, has a poor rendering effect, and has regional restrictions. For example, it has lip synchronization only in Japanese, its shader supports only MToon (a toon shader with global illumination), Unlit (a shader that lets materials not affected by lighting), and physically based rendering (PBR). As a result, this format has a low extension flexibility, for example, does not support either animation or scene loading and cannot be extended in functions by the third party, which hinders the development of vTuber.

As mentioned above, each of the above 3D file formats has specific limitations. The present application provides a new file format, so as to support players in creating high-degree-of-freedom 3D scenes to be shared and traded, where the use of the new file format is not affected by technical factors such as operating systems, tool types, and tool versions. This format is not affected by operating systems, tool types, and tool versions, easy to use, create, and modify, and convenient to be loaded and exported at runtime.

According to the technical solutions provided in the present application, functions are developed based on Extensions and Extras fields reserved in the glTF format, and existing glTF files are compatible, thereby ensuring that the Json Schema of the standard glTF format is not destroyed, and that it can be opened and modified by other tools. The eligibility of conventional glTF tools for previewing files in the new file format is retained, such that previewing and editing capabilities of non-special-purpose tools can be retained to some extent, the smallest data structure of the files can be ensured, and default data is supported to be used in the fields; and a large amount of reused data does not need to be saved in the Extras field, and data with strong commonality and strong reusability is saved in the Extensions field.

Terms in the present application are explained below:
Three-dimensional (3D) image: one of image files and used to store information of a 3D model. A 3D image includes a 3D model, a 3D animation, and a 3D project file. The 3D image may include model information composed of polygons and vertices in a 3D space interpreted by 3D software, and the model information may further include information such as color, texture, geometric shape, light source, and shadow. 3D image file formats may be used in VR, 3D printing, game, movie effect, architecture, medicine, and other related scenes.

Graphics Language Transmission Format (glTF): a 3D computer graphics format and standard. It supports storage of 3D models, appearance, scenes, and animations. It is a simplified and interoperable format for 3D assets, while minimizing a file size and processing difficulty of applications. glTF assets include JSON files and supported external data. Specifically, glTF assets include a JSON file (.gltf) that describes a complete scene: a hierarchical structure of a node, material, camera and mesh, animation, and descriptor information of other constructs; binary files (.bin) including geometry and animation data as well as other data in buffers; and texture (.jpg, .png). 3D objects in a scene are defined using meshes connected to the nodes. The material is used to define the appearance of the objects. The animation describes how a 3D object is transformed over time. The skin defines how the geometry of the object is deformed based on a skeleton pose. The camera describes view configurations for a renderer.

Resources: may include an image, a shader (shading code), a material, a model, an animation, etc.

Material: a data set expressing interaction of an object with light and read by the renderer, including a map, a lighting algorithm, etc.

Texture: a segment of regular and repeatable bitmap, and is the basic unit of data input.

Map: includes a texture and many other information, such as a texture coordinate set, map input and output control, etc. Maps have a plurality of forms, such as lightmaps, environment maps, reflection maps, etc. A lightmap is used to simulate a lighting effect of a surface of an object. An environment map includes six textures and a corresponding texture coordinate set.

Texture mapping: used to map a texture onto a surface of a 3D object using a coordinate set (such as UV coordinates).

AssetBundle: a file storage format supported by Unity and also a resource storage and update method officially recommended by Unity. It may compress resources (assets), pack them into groups, load them dynamically, and implement hot updates.

FBX: a format used by FilmBox software, and later renamed Motionbuilder. FBX may be used for import and export of models, materials, actions, and camera information between software such as Max, Maya, Softimage, etc.

DAZ: a file format for 3D scenes created by the modeling program DAZ Studio.

Universal Scene Description (USD): a file format based on a whole animated movie process and provided by Pixar.

Pak: an image resource format customized by the GOM engine.

Virtual Reality Modeling (VRM): a format for a virtual 3D humanoid model.

Avatar: a human-like 3D character model.

Metaverse: meta-universe, or referred to as post-universe, metaphysical universe, extra-sensory space, virtual space, is a network of 3D virtual worlds focused on social connections. Metaverse may involve a persistent and decentralized online 3D virtual environment.

Game engine: a core component of some well-written editable computer game systems or interactive real-time image applications. These systems provide game designers with various tools required to write games, and aim to allow game designers to make game programs easily and quickly without starting from the ground up. Most of them support a plurality of operating platforms, such as Linux, MacOS X, and Microsoft Windows. The game engine includes the following systems: a rendering engine (namely "renderer", including a 2D image engine and a 3D image engine), a physical engine, a collision detection system, sound effects, a script engine, computer animations, artificial intelligence, a network engine, and scene management.

The technical solutions provided in the embodiments of the present application are described below using an exemplary application environment.

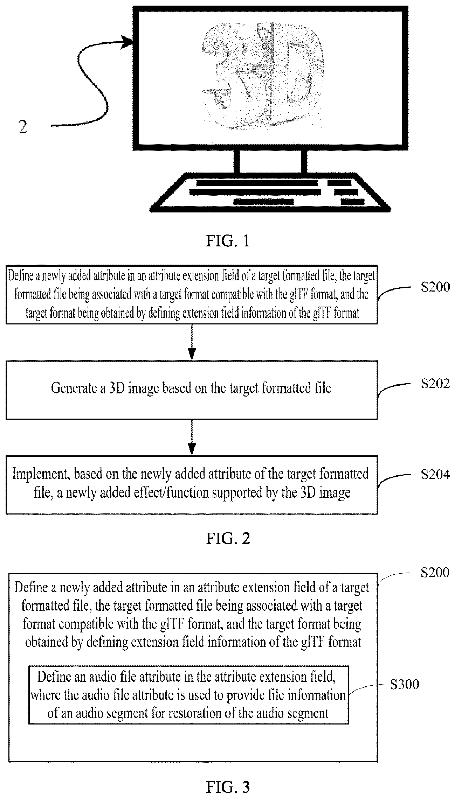

FIG. 1 is a diagram showing an application environment of a method for implementing a 3D image according to an embodiment of the present application. A computer device 2 may be configured to run and process 3D files. The computer device 2 may include any type of computing device, such as: smartphones, tablet devices, laptop computers, and virtual machines.

The computer device 2 may run operating systems such as Windows, Android^{™}, or iOS. In addition, a user may install various applications according to requirements, for example, install a software development kit (SDK) for making 3D games, 3D animations, 3D videos, and the like.

Hereinafter, the present application provides a method and system for implementing a 3D image, a computer device, and a computer-readable storage medium.

### Embodiment 1

FIG. 2 is a flowchart schematically showing a method for implementing a 3D image according to Embodiment 1 of the present application.

As shown in FIG. 2, the method for implementing a 3D image may include steps S200 to S204.

In S200, a newly added attribute is defined in an attribute extension field of a target formatted file associated with a target format compatible with glTF format, where the target format is obtained by defining extension field information of the glTF format.

In S202, a 3D image is generated based on the target formatted file.

In S204, a newly added effect/function supported by the 3D image is implemented based on the newly added attribute in the target formatted file.

Various elements that construct a 3D image are defined in the glTF format. These elements are scene, node, mesh, camera, material, texture, and skin.

The scene refers to entries for describing a scene structure and defines a scene graph by referring to one or more nodes.

The node is attached to the scene. The node may refer to child nodes, meshes, cameras, skins that describe mesh transformations, etc.

The mesh is used to describe mesh data of a 3D object appearing in a scene.

The camera refers to viewing frustum configurations for rendering the scene.

Each of the above elements has one or more attributes. An attribute is used to define properties, features, characteristics, descriptions, etc. of a corresponding element.

For example, an attribute list of a node may include: camera, child node, skin, matrix, mesh, quaternion rotation, scale ratio, position information, weight array of meshes, name, an attribute extension field, and an attribute extras field.

In this embodiment of the present application, a new 3D file format (a target format) is provided on the basis of the glTF format.

In the target format, all the functions and effects supported by the glTF format are inherited, and on the premise of not destroying the structure of the glTF format, the attribute extension field and the attribute extras field are used to define the newly added attribute of the target format.

In exemplary application, the newly added attribute includes: an attribute defined in the extension field to be pointed to by a node; an attribute defined in the extension field, to which no node points; and/or an attribute defined in a node.

In exemplary application, the newly added attribute may include an audio file attribute, an audio behavior attribute, an expression transformation attribute, a collider attribute, a humanoid bone attribute, a cloth changing attribute, a lightmap attribute, a metadata attribute, a bone dynamics attribute, a post-processing attribute, a dynamic script attribute, a rendering attribute for a scene, a skybox attribute, a cubemap attribute, a story timeline attribute, a sprite attribute, a streaming media attribute, a resource variable attribute, an export attribute, etc. Certainly, other attributes supported by the engine or web may be included, so as to support more effects and functions.

Providing the target formatted file in the target format (the new 3D file format) has the following advantages:
(1) The target format is developed based on the glTF format and inherits a good cross-platform capability and ecological support of the glTF format. In other words, a new format is created while enhancing the capability of the glTF format and controlling the extensibility of the glTF format, so as to meet service requirements.
   The eligibility of conventional glTF tools for previewing the target formatted file is retained, dependence of the new 3D file format on special-purpose tools is reduced, such that previewing and editing capabilities can be retained to some extent without using a specific SDK, the smallest data structure of the target formatted file can be ensured, and default data is supported to be used in the fields. This format is not affected by operating systems, tool types, and tool versions, easy to use, create, and modify, and convenient to be loaded and exported at runtime.
(2) The newly added attribute is provided in the attribute extension field, which does not destroy the Json Schema of the glTF format, and files in the glTF format are compatible.
(3) The newly added attribute is provided in the attribute extension field, and requirements of application in various scenarios may be met based on the newly added attribute.

It should be noted that, to optimize loading of the target formatted file and reduce memory usage, two different loading mechanisms are provided, to adapt to different usage scenarios, that is: a large amount of reused attribute information does not need to be saved in the attribute extras field, and data with strong commonality and strong reusability is saved in the attribute extension field.

The newly added attribute of the target formatted file is described below through a plurality of optional embodiments.

As an optional embodiment, the target formatted file may support an audio function.

As shown in FIG. 3, step S200 may include: step S300: defining an audio file attribute in the attribute extension field,
where the audio file attribute is used to provide file information of an audio segment for restoration of the audio segment.

The audio file attribute may be pointed to by the node, so as to be used by the node.

The audio file attribute may include:
a uniform resource identifier (URI) used to indicate an index position of the audio file;
a media resource type (mimeType) used to indicate a supported audio format; and
a buffer view (bufferView) used to indicate an index position of the audio segment,
where if the target formatted file is exported as a .gltf file, the uniform resource identifier provides the index position; or if the target formatted file is exported as a .glb file, the buffer view provides the index position.

As listed in Table 1, the audio file attribute defined in the attribute extension field includes the following information:

**Table 1**

| | **Type** | **Description** | **Required** |
|---|---|---|---|
| **name** | character string | The name of an audio. | No |
| **uri** | character string | The URI of an external file of a supported audio format. | No |
| **mimeType** | character string | Indicates a supported audio format and requires to be defined if data is read from bufferView instead of uri. | No |
| **bufferView** | bufferViewId (index ID) | Defines raw data retrieved from a file. When some file types (such as .glb files) are defined, audio data requires to be provided with the mimeType attribute. | No |
| **lengthSamples** | number | The length of an audio segment in a sample. | Yes |
| **channels** | number | The number of channels in the audio segment. | Yes |
| **frequency** | number | The sampling frequency of a clip in hertz. | Yes |

The target formatted file may be exported with either a .gltf suffix or a .glb suffix. When the file is exported as a separate .gltf file, uri is used; or when the file is exported as a .glb file, information will be stored in the bufferView field. It should be noted that, more suffixes may be defined for different export types in the future, such as defining different suffixes for files based on character models or scenes, as a functional distinction.

In the table, mime Type specifies an audio format, such as supported WAV and OGG.

Based on the newly added audio file attribute, an audio segment may be exported in Unity in the WAV or OGG format. By default, a short audio clip may be exported in the WAV format, and a long audio clip may be compressed and exported in the OGG format.

As an optional embodiment, the target formatted file may support an audio control function.

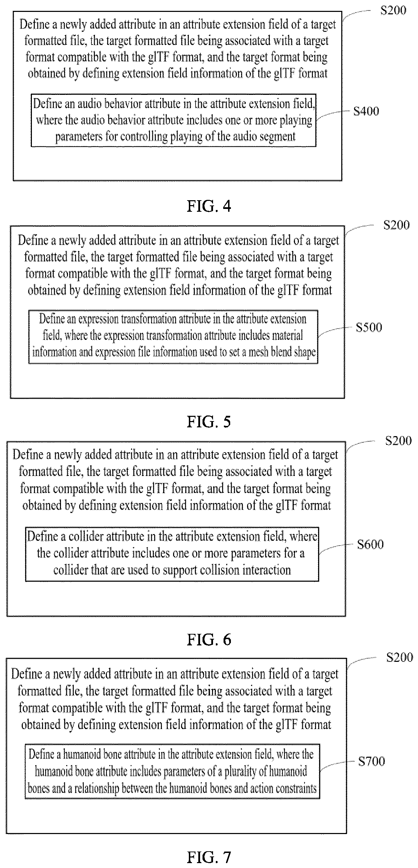

As shown in FIG. 4, step S200 may include: step S400: defining an audio behavior attribute in the attribute extension field,
where the audio behavior attribute includes one or more playing parameters for controlling playing of the audio segment.

On the basis of referring to the audio file attribute, the node may further refer to the audio behavior attribute.

As listed in Table 2, the audio behavior attribute defined in the attribute extension field include the following information:

**Table 2**

| | **Type** | **Description** | **Required** |
|---|---|---|---|
| **Audio** | index identifier (ID) | Refers to an audio segment to be played. | No |
| **playOnAwake** | bool | If enabled, the sound may start to be played when the scene starts. | No |
| **loop** | bool | Enabling this option makes an audio clip loop when it ends. | No |
| **volume** | float | How loud the sound is. | No |
| **pitch** | float | The amount of change in audio pitch caused due to the speed at which the sound is played. | Yes |
| **panStereo** | float | Sets the left and right volumes of 2D stereo. | Yes |
| **spatialBlend** | float | Sets the degree of spatial influence of 3D audio on the sound. | Yes |
| **rolloffMode** | enum | The speed at which the sound attenuates. The higher the value, the closer the monitor is before hearing the sound. | No |
| **dopplerLevel** | float | Determines how much Doppler effect is applied to this audio source (if it is set to 0, the effect is not applied). | Yes |
| **spread** | float | Sets the spread angle of 3D stereo or multichannel sound in speaker space. | Yes |
| **spatialBlend** | float | Sets the degree of influence of the 3D engine on this audio source. | Yes |
| **minDistance** | float | Within the minimum distance, the sound is kept at the maximum volume. Outside the minimum distance, the sound starts to attenuate. | Yes |
| **maxDistance** | float | The distance at which the sound stops attenuating. Outside the distance, the sound is kept at the volume, and it will be at MaxDistance units from the listener and will no longer attenuate. | Yes |

As an optional embodiment, the target formatted file may support an expression transformation function.

As shown in FIG. 5, step S200 may include: step S500: defining an expression transformation attribute in the attribute extension field,
where the expression transformation attribute includes material information and expression file information used to set a mesh blend shape.

The expression transformation attribute may be pointed to by the node, so as to be used by the node.

As listed in Table 3, the expression transformation attribute defined in the attribute extension field includes the following information:

**Table 3**

| | **Type** | **Description** | **Requir ed** |
|---|---|---|---|
| **keyName** | character string | The name of an expression. | No |
| **preset** | enum | The enumeration value of the expression. | Yes |
| **blendShapeValues** | List<BlendShapeValueBindi ng> | The index and corresponding weight of BlendShape (expression transformation) | No |
| **materialVector4Val ues** | List<MaterialVector4ValueB inding> | Adjustment of material parameters for the Vector4 (four-dimensional value) type. | No |
| **materialColorValu es** | List<MaterialColorValueBin ding> | Adjustment of material parameters for the color type. | No |
| **materialFloatValue s** | List<MaterialFloatValueBind ing> | Adjustment of material parameters for the float type. | No |

In the table, blendShapeValues defines a mapping table that records the weights of a plurality of mesh transformations to expression transformations; materialVector4Values defines a list that records a plurality of sets of material parameters, each set including four component vectors (for example, a mesh tangent and a shader); materialColorValues defines another list that records a plurality of sets of material parameters representing colors; and materialFloatValues defines still another list that includes a plurality of sets of material parameters of the float type.

When the above information is exported from an expression transformation means, required information is exported as extensions and then referred to under the node.

As an optional embodiment, the target formatted file may support a collision effect.

As shown in FIG. 6, step S200 may include: step S600: defining a collider attribute in the attribute extension field,
where the collider attribute includes one or more parameters for a collider that are used to support collision interaction.

The collider attribute may be pointed to by the node, so as to be used by the node.

As listed in Table 4, the collider attribute defined in the attribute extension field include the following information:

**Table 4**

| | **Type** | **Description** | **Required** |
|---|---|---|---|
| **type** | enum | The type of a collider (for example, a box, a sphere, a capsule, and a mesh). | Yes |
| **isTrigger** | bool | Whether the collider is used as a trigger. | Yes |
| **center** | Vector3 (three-dimensional value type) | The center point of the collider. | Yes |
| **size** | Vector3 | The size of the square collider. | No |
| **radius** | float | The radius of the sphere collider. | No |
| **height** | float | The height of the capsule collider. | No |
| **direction** | enum | The direction of the capsule collider. | No |
| **convex** | bool | Whether a convex collider (mesh collider only) is used. | No |

As an optional embodiment, the target formatted file may support a humanoid bone effect.

As shown in FIG. 7, step S200 may include: step S700: defining a humanoid bone attribute in the attribute extension field,
where the humanoid bone attribute includes parameters of a plurality of humanoid bones and a relationship and action constraints between the humanoid bones.

The humanoid bone attribute may be pointed to by the node, so as to be used by the node. The node corresponds to actual humanoid bone points.

The humanoid bone attribute defines Avatar (a virtual character) used in a humanoid model.

Any model imported as a humanoid animation type may generate Avatar resources that store information about driving the animator.

The Avatar system is used to tell the game engine how to recognize a particular animated model is a humanoid model in layout, and which parts of the model correspond to legs, arms, the head, and the body. After this step, the animation data may be "reused". It should be noted that due to the similarity in bone structures between different humanoid characters, it is possible to map one humanoid character to another in an animation, enabling relocation and inverse kinematics.

As listed in Table 5, the humanoid bone attribute defined in the attribute extension field includes the following information:

**Table 5**

| | **Type** | **Description** | **Required** |
|---|---|---|---|
| **humanBones** | List<GlTFHumanoidBone> | The connections and spatial transformations of all joints. | Yes |
| **arm Stretch** | float | The length by which the arms are allowed to stretch when using inverse kinematics (IK). | Yes |
| **leg Stretch** | float | The length by which the legs are allowed to stretch when using IK. | Yes |
| **upper Arm Twist** | float | Defines how the rolling/twisting of the upper arms is distributed between the shoulder and elbow joints. | Yes |
| **lower Arm Twist** | float | Defines how the rolling/twisting of the lower arms is distributed between the elbow joints and wrist joints. | Yes |
| **upperLegTwist** | float | Defines how the rolling/twisting of the upper legs is distributed between the upper legs and knee joints. | Yes |
| **lowerLegTwist** | float | Defines how the rolling/twisting of the lower legs is distributed between the knees and ankles. | Yes |
| **feetSpacing** | float | Modification to the minimum distance between the feet of a humanoid model. | Yes |
| **hasTranslationDoF** | bool | Whether a translation degree of freedom (DOF) is used. | Yes |

In the table, humanBones records a plurality of joints and a connection and spatial transformation relationship between the joints (such as the neck and head).

On the basis of referring to the humanoid bone attribute, the node may further refer to an bone change attribute.
The bone change attribute further includes the content listed in Table 6.

**Table 6**

| | **Type** | **Description** | **Required** |
|---|---|---|---|
| **bone** | List | The names of bones. | Yes |
| **Node** | number | The ID of the spatial node where the joint is located. | Yes |
| **useDefaultValues** | bool | Whether the default value is used. | Yes, default value: Yes |
| **min** | Vector3 | The minimum value of the rotation angle range away from the initial value that may be applied to the muscles, and if the default value is used, it is not required. | Yes |
| **max** | Vector3 | The maximum value of the rotation angle range away from the initial value that may be applied to the muscles, and if the default value is used, it is not required. | Yes |
| **center** | Vector3 | The default direction of the bones when no muscle action is applied, and if the default value is used, it is not required. | Yes |
| **axisLength** | float | The length of the bone to which the limit is applied. | Yes |

As an optional embodiment, the target formatted file may support a cloth changing function.

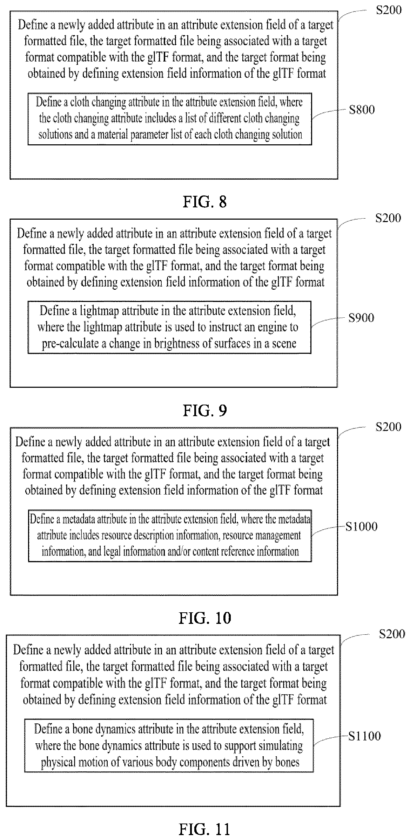

As shown in FIG. 8, step S200 may include: step S800: defining a cloth changing attribute in the attribute extension field,
where the cloth changing attribute includes a list of different cloth changing solutions and a material parameter list of each cloth changing solution.

The cloth changing attribute may be pointed to by the node, so as to be used by the node.

On the premise that there is the Avatar, the node may refer to/point to the cloth changing attribute, thereby supporting cloth changing of characters.

The cloth changing system implements cloth changing by changing the mesh visibility or materials on the mesh.
As listed in Tables 7 to 9, the cloth changing attribute defined in the attribute extension field includes the following information:

**Table 7**

| | **Type** | **Description** | **Required** |
|---|---|---|---|
| **dressUpConfigs** | GLTFDress | The set of cloth changing solutions. | Yes |

**Table 8**

| | **Type** | **Description** | **Required** |
|---|---|---|---|
| **name** | character string | The name of the cloth changing solution. | Yes |
| **rendererConfigs** | List | Records all visible renderers and materials. | Yes |

**Table 9**

| | **Type** | **Description** | **Required** |
|---|---|---|---|
| **Node** | number | Whether the node is to be activated for rendering. | Yes |
| **materials** | List<int> | All materials on the renderer. | Yes |

Table 7 lists a set of cloth changing solutions, Table 8 lists information of each cloth changing solution, and Table 9 lists changes included in a single cloth changing.

As an optional embodiment, the target formatted file may support a lightmap effect.

As shown in FIG. 9, step S200 may include: step S900: defining a lightmap attribute in the attribute extension field,
where the lightmap attribute is used to instruct an engine to pre-calculate a change in brightness of surfaces in a scene. The lightmap attribute is defined in the attribute extension field and does not need to be pointed to in other objects.

As listed in Table 10, the lightmap attribute defined in the attribute extension field includes the following information:

**Table 10**

| | **Type** | **Description** | **Required** |
|---|---|---|---|
| **lightmapsMode** | enum | Lightmap (and lighting) configuration mode, controls how lightmaps interact with lighting and what kind of information they store. | Yes |
| **lightmapsEncoding** | enum | Different compression and encoding solutions, depending on the target application platform and compression quality settings. | Yes |
| **lightmaps** | LightmapTextu reInfo[] (array) | The map stores the occlusion mask for each light. | No |

In the table, each map stores different information about lighting for the scene of the user.

For example, LightmapTextureInfo[] includes: the color of the incident light (required), the main direction of the incident light (required), the occlusion mask for each light (not required), etc.

As an optional embodiment, the target formatted file may support management, so as to extend support for element-based management and the like.

As shown in FIG. 10, step S200 may include: step S1000: defining a metadata attribute in the attribute extension field,
where the metadata attribute includes resource description information, resource management information, and legal information and/or content reference information. The metadata attribute is defined in the attribute extension field and does not need to be pointed to in other objects.

The resource description information is used for discovery and recognition, and may include elements such as title, abstract, author, and keywords, which are arranged in sequence to form a chapter. It describes the type, version, relationship, and other characteristics of digital materials.

The resource management information is information such as resource types and permissions for managing resources.

The legal information provides information about creators, copyright owners, and the public license.

The content reference information is information about content.
As listed in Table 11, the metadata attribute defined in the attribute extension field includes the following information:

**Table 11**

| | **Type** | **Description** | **Required** |
|---|---|---|---|
| **formatVersion** | character string | The version of a format. | Yes |
| **title** | character string | The title of an asset. | Yes |
| **version** | character string | The version of the asset. | Yes |
| **author** | character string | Author. | No |
| **contact** | character string | Contact information. | No |
| **reference** | character string | Reference website. | No |
| **thumbnail** | Id | The thumbnail of the asset. | No |
| **contentType** | enum | Whether the asset type is a scene or a character. | No |
| **legalUser** | enum | What kind of user is legal. | No |
| **violentUsage** | enum | Whether it is allowed to be used in violent scenes. | No |
| **sexualUsage** | enum | Whether it is allowed to be used in sexually explicit scenes. | No |
| **commercialUsage** | enum | Whether it is allowed to be used commercially. | No |
| **licenseType** | enum | The type of the license. | No |
| **customLicenseUrl** | character string | If a specific agreement needs to be developed, the URL of the agreement is to be added here. | No |

As an optional embodiment, the target formatted file may support an animation based on bone dynamics.

As shown in FIG. 11, step S200 may include: step S1100: defining a bone dynamics attribute in the attribute extension field,
where the bone dynamics attribute is used to support simulating dynamic motion of an object to which bones are bound.

The bone dynamics attribute is used to be pointed to by the node, so as to be used by the node.

In exemplary application, movement of skirts, hair, pendants, and the like following the movement of bones and bodies may be simulated.

As an optional embodiment, the target formatted file may support post-processing, so as to extend support for post-processing functions and the like.

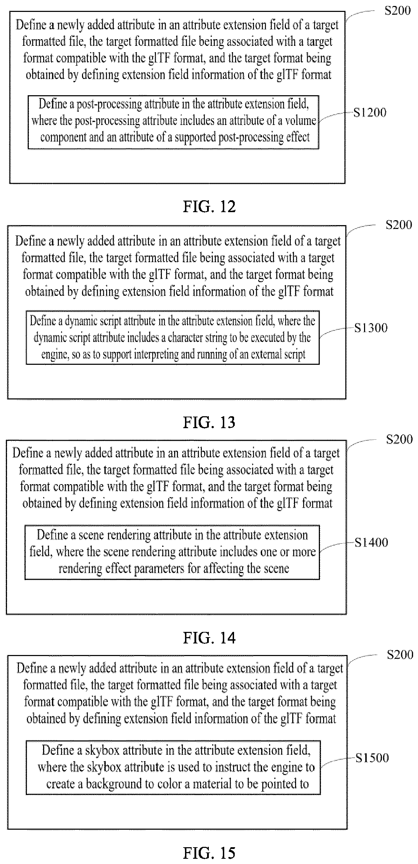

As shown in FIG. 12, step S200 may include: step S 1200: defining a post-processing attribute in the attribute extension field,
where the post-processing attribute includes an attribute of a volume component and an attribute of a supported post-processing effect.

The post-processing attribute may be pointed to by the node, so as to be used by the node.

The volume component includes attributes that control how they affect the camera and interact with other volumes. It is an effect that acts on the full screen, is used for 3D rendering, improves rendering, and requires very little time to set.

The following describes the attributes of a volume component:
As listed in Table 12, the attributes of a volume component include the following information:

**Table 12**

| **id** | Id | The ID of the configuration file. | Required |
|---|---|---|---|
| **isGlobal** | bool | Whether it takes effect globally or only when the camera is inside the collider. | No |
| **weight** | float | How much the volume component affects the scene. | Yes |
| **blendDistance** | float | Controls the blending of effects when a plurality of volume components affect the scene. | Yes |
| **priority** | number | Using this value to determine the volume when a plurality of volume components have equal impact on the scene. A volume component with a higher priority is first used. | Yes |

Which effect is to be used may be specified based on the ID of the configuration file.

Regardless of whether the effect is used globally or locally, it needs to be pointed to by the node to serve the node where the post-processing attribute is specified.

The supported post-processing effect may include: ambient light occlusion, bloom, mixer, chromatic aberration, color adjustment, color curve, depth of field, film grain, lens distortion, lift, gamma and gain, motion blurring, panini projection, shadow midtone highlight, split tone, tone mapping, vignetting, and white balance.

For each post-processing effect, a corresponding attribute may be defined in the attribute extension field.
For example, vignetting is a reduction of an image's brightness or saturation toward the periphery compared to the image center. Vignetting includes the attributes in Table 13.

**Table 13**

| | **Type** | **Description** | **Required** |
|---|---|---|---|
| **color** | color value type | The color for vignetting. | No |
| **center** | Vector2 (two-dimensional value type) | The center point, as a reference, the center of the screen is [0.5, 0.5]. | Yes |
| **intensity** | float | The intensity of the vignetting effect. | Yes |
| **smoothness** | float | The smoothness of the vignetting border. | Yes |
| **rounded** | bool | When enabled, the vignette is in a perfectly circular shape. When disabled, the vignette matches the shape at the current aspect ratio. | Yes, default value: 0 |

As an optional embodiment, the target formatted file may execute a dynamic script, such as hot update.

As shown in FIG. 13, step S200 may include: Step S1300: defining a dynamic script attribute in the attribute extension field,
where the dynamic script attribute includes a character string to be executed by the engine, so as to support interpreting and running of an external script. The dynamic script attribute is defined in the attribute extension field and does not need to be pointed to in other objects.

In exemplary application, the above character string may point to an external script, such as Puerts, Lua, and the like.

Rendering events and events from an input device are received, and the script engine executes scripts after receiving corresponding events.

The events may include: rendering of a first frame of an object, enabling of an object component, disabling of the object component, destroying, updating of each frame, and calling periodically according to the time after all objects are updated.

Further, the events may further include a manually triggered event, such as an event triggered by the following devices: a keyboard, a mouse, a joystick, a controller, a touch screen, a motion sensing function (such as an accelerometer or a gyroscope), and a virtual reality (VR) and augmented reality (AR) controller, etc.

As an optional embodiment, the target formatted file may support scene rendering.

As shown in FIG. 14, step S200 may include: Step S1400: defining a rendering attribute for a scene in the attribute extension field, where the rendering attribute for the secne includes one or more rendering effect parameters for affecting the scene. The rendering attribute for the secne is defined in the attribute extension field and does not need to be pointed to in other objects.
As listed in Table 14, the rendering attribute for the secne defined in the attribute extension field includes the following information:

**Table 14**

| | **Type** | **Description** | **Required** |
|---|---|---|---|
| **subtractiveShadowColor** | Id | The color of the sun shadows in the Subtractive mode (a lighting mode shared by all mixed lights in a scene). | No |
| **ambientMode** | enum | The ambient light mode, which determines where to get ambient light. | No |
| **ambientIntensity** | float | How much the ambient light affects the scene. | No |
| **ambientLight** | Color | The color of the ambient light. | No |
| **ambientSkyColor** | Color | Ambient lighting coming from above. | No |
| **ambientEquatorColor** | Color | Ambient lighting coming from the sides. | No |
| **ambientGroundColor** | Color | Ambient lighting coming from below. | No |
| **reflectionIntensity** | float | How much the skybox/custom cubemap reflection affects the scene. | No |
| **reflectionBounces** | float | The number of times a reflection includes other reflections. | No |
| **defaultReflectionResolution** | float | Cubemap resolution for default reflection. | N o |
| **flareFadeSpeed** | float | The fade speed of all flares in the scene. | No |
| **flareStrength** | float | The intensity of all flares in the scene. | No |
| **halo Strength** | float | The size of light halos. | No |
| **fog** | bool | Whether the fog effect is enabled. | No |
| **fogColor** | Color | The color of fog. | No |
| **fogDensity** | float | The density of exponential fog. | No |
| **fogStartDistance** | float | The starting distance of the linear fog. | No |
| **fogEndDistance** | float | The ending distance of linear fog. | No |
| **fogMode** | enum | The fog mode to be used. | No |

As an optional embodiment, the target formatted file may support a skybox effect.

As shown in FIG. 15, step S200 may include: Step S1500: defining a skybox attribute in the attribute extension field, where the skybox attribute is used to instruct the engine to create borderless background display to color a material to be pointed to. The skybox attribute is defined in the attribute extension field and does not need to be pointed to in other objects. As listed in Table 15, the skybox attribute defined in the attribute extension field includes the following information:

**Table 15**

| | **Type** | **Description** | **Required** |
|---|---|---|---|
| **material** | id | The material of the skybox shader to be used. | Yes |

A video game level is used as an example. When a skybox is used, the level is enclosed in a cube. The sky, distant mountains, distant buildings, and other inaccessible objects are projected onto the surfaces of the cube, creating the illusion of a distant 3D environment. Similarly, the skydome uses a sphere or hemisphere instead of a cube.

As an optional embodiment, the target formatted file may support a cubemap effect.

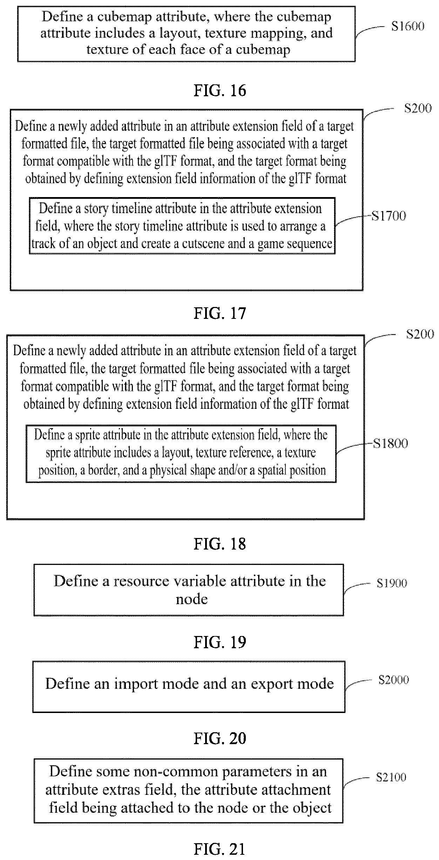

As shown in FIG. 16, the method may further include: step S1600: defining a cubemap attribute in the attribute extension field,
where the cubemap attribute includes a layout, texture mapping, and texture of each side of a cubemap.

The cubemap attribute is not pointed to by a node, but is used as a special map type to be pointed to in the material.
As listed in Table 16, the cubemap attribute may include the following information:

**Table 16**

| | **Type** | **Description** | **Required** |
|---|---|---|---|
| **imageType** | enum | The layout of a cubemap. | No |
| **mipmap** | bool | Whether a mipmap (copies of different resolutions, usually used for antialiasing) is generated. | Yes |
| **texture** | id | A texture containing data of six faces. | Yes |

A cubemap is a set of six square textures that represent reflections in the environment. The six squares form the faces of an imaginary cube surrounding an object; each face represents a view along a world axis (up, down, left, right, front, back) direction. The image type (imageType) includes a texture (with an aspect ratio of 6:1 or 1:6) formed by combining six squares in one row or column and three types of panoramic images (with an aspect ratio of 2:1).

As an optional embodiment, the target formatted file may implement operations based on the story timeline.

The target formatted file includes a node, and the story timeline attribute is attached to the node to extend editing functions and the like.

As shown in FIG. 17, step S200 may include: step S 1700: defining a story timeline attribute in the attribute extension field,
where the story timeline attribute is used to arrange a track of an object and create a cutscene and a game sequence.

The story timeline attribute may be pointed to by a node, so as to be used by the node.

The story timeline attribute may include the following information:
the name of a track resource;
an animation track group, describing an animation track;
an audio track group, describing an audio track;
a track group for expression transformations (usually used for facial capture expression animations), describing expression transformations;
a material parameter curve track group, where the curve describes changes of the material by changing output values (parameters of the floating-point number type) over time;
a material parameter curve track group, where the curve describes changes of the color by changing output values (parameters of the color type) over time;
a material parameter track group (parameters of the integer type), describing the material;
a material parameter track group (parameters of the color type), describing the color;
a material parameter track group (parameters of the Vector4 type), describing Vector4;
a material parameter track group (parameters of the Texture2D map type), describing Texture2D (texture);
whether the object is activated, the bool type, describing whether the object is activated;
whether the component is activated, the bool type describing whether the component is activated; and
the length of the entire track, the float type describing the length of the track.

All tracks each include the following parameters: a resource name, a start time, an end time, and a resource ID. The resource ID is used to specify the subscript position of the data source, which may be an animation, a map, audio, or other data.

The track parameters may include: a track name (the character string type, not required), a start time (the float type, required), and an end time (the float type, required).

A generic type may be used to represent sub-track data contained in the track group of each category, for example, describe the set of all sub-tracks under the category.

Track data under different categories may be obtained by inheriting a specified generic type, for example, two track groups respectively representing animation and audio may be obtained.

Material curve parameters may be all inherited from the generic type, for example: the use of one of a plurality of materials on the renderer is specified, and whether to execute it in reverse after execution, and curve data.

The expression transformation curve is used for smooth facial capture expression transformation.

For the floating-point parameter curve of materials, parameters of the materials for the floating-point type may be continuously updated based on time, including: the name of a material parameter to be set.

For the color parameter curve of materials, parameters of the materials for the color type may be continuously updated based on time and inherited from the above, including: color values at the start and end. Interpolation is performed based on time, and the color of each frame is continuously updated.

The animation component on the specified node is obtained, only the node ID will be exported, and the rest of variables will be created during loading.

When parameters in the story timeline attribute are used in the node, the playing behavior of the story timeline may be specified, where playing parameters controlling the playing behavior may include: An ID (describing a track name, required), whether to play automatically after loading (the bool type, not required), and whether to play in a loop (the bool type, not required).

As an optional embodiment, the target formatted file may implement sprite operations to extend texture management and combination, and the like.

As shown in FIG. 18, step S200 may include: step S1800: defining a sprite attribute in the attribute extension field,
where the sprite attribute includes a layout, texture reference, a texture position, a border, a physical shape and/or a spatial position.

The sprite attribute may be pointed to by the node, so as to be used by the node.
As listed in Table 17, the sprite attribute defined in the attribute extension field may include the following information:

**Table 17**

| | **Type** | **Description** | **Required** |
|---|---|---|---|
| **name** | character string | The layout of a cubemap. | No |
| **texture** | id | Reference of the used texture. This may point to the atlas if packed, or to the source sprite if unpacked. | Yes |
| **rect** | Rect (a rectangular structure type, used to represent the position and length and width of the rectangle). | The position and length and width of the sprite on the original texture, in pixels. | Yes |
| **pivot** | enum | The position of the sprite's center point in the Rect on the original texture, specified in pixels. | Yes |
| **pixelsPerUnit** | float | The number of pixels in the sprite corresponding to one unit in world space. | Yes |
| **border** | Vector4 (four-dimensional value type) | Returns the border size of the sprite (X = left, Y = bottom, Z = right, W = top). | Yes |
| **generateFallbackPhysicsShape** | bool | Generates a default physical shape for the sprite. | No, default value: Yes |

The sprite is a two-dimensional graphic object. In 3D scenes, sprites are generally standard textures. Textures may be combined and managed through the above sprite attribute, so as to improve the efficiency and convenience during development.

As an optional embodiment, the target formatted file may implement streaming media playing and control, so as to extend editing functions and the like.

As shown in FIG. 19, step S200 may include: step S1900: defining a streaming media attribute in the node,
where the streaming media attribute includes a uniform resource locator (URL) name, a URL address, and a streaming media format of streaming media.
As listed in Table 18, the streaming media attribute defined in the attribute extension field may include the following information:

**Table 18**

| | **Type** | **Description** | **Required** |
|---|---|---|---|
| **name** | character string | URL name. | No |
| **url** | character string | URL address. | Yes |
| **mimeType** | character string | Video format. | No |
| **alternate** | List<string> | Alternate address. | No |

As an optional embodiment, the target formatted file may support the use of other files.

The target formatted file includes a node, and the resource variable attribute is attached to the node to extend the use of other files.

As shown in FIG. 20, step S200 may include: step S2000: defining a resource variable attribute in the node,
where the resource variable attribute includes a variable type and a set of indexes pointing to reference fields, so as to support the use of resources.
As listed in Table 19, the resource variable attribute defined in the attribute extension field may include the following information:

**Table 19**

| | **Type** | **Description** | **Required** |
|---|---|---|---|
| **type** | enum | Variable type. | No |
| **collections** | List<id> | A set of indexes pointing to reference fields. | Yes |

The resource variable attribute is used to support some resources that are not currently used but may be used in the future. Exemplarily, these resources may be textures, cubemaps, materials, audio segments, animation segments, and lightmaps.

As an optional embodiment, the method further includes:
defining some non-common parameters in an attribute extras field which is mounted to a node or mounted under an object.

The non-common parameters are relative to common parameters, and refer to parameters such as those that are not global and have frequent update iterations.

In the target format of the embodiment, in addition to regular fields, the attribute extension field (Extensions) and attribute extras field (Extras) are included. The regular fields in the target format are the same as the fields in the glTF format, ensuring that the target format is compatible with the glTF format. The attribute extras field is used to add some non-generalized information. The attribute extension field is used to carry information of common and standard content, and the attribute extras field is used for supplement of non-standard and non-common information. The attribute extras field is generally attached to a node or object, providing specific functional supplements. The following attribute information may be recorded in Extras, for example, attributes of a few components supported by the engine, or attributes of components that are frequently updated (after some components are updated, their attribute names are changed or new fields are added). A code generator used to generate serialization and deserialization codes is provided, so as to help users who use the software development kit (SDK) to customize non-common functional supplements. The attribute extension field is used to record information with strong commonality. In other words, the attributes recorded in the attribute extension field are more common and reusable than those recorded in the attribute extras field.

For example, the following attribute information may be recorded in Extras:
(1) attributes (names) of humanoid bones;
(2) remaining necessary information of the camera to better support the restoration of the actual scene;
(3) information of custom materials to ensure that it can be used by other tools; and
(4) UI information.

Currently supported information includes information export of animation, sound, camera, light, material, physics, rendering, and other types of components, and variables publicly accessible by custom scripts also support export using code generation tools.

As an optional embodiment, the target formatted file may implement custom import and export, so as to extend the export function and the like.

As shown in FIG. 21, the method may include: step S2100: defining an import mode and an export mode,
where the export mode is used to define an export of a provided material parameter and/or an export of a provided component parameter.

For example, parameters of a specified type (for example, a shader type) and information of various material parameters to be exported may be defined.

For another example, parameters to be exported as extras field information under the node, for example, parameters of a specified component type (for example, an animation component) and information of various public parameters to be exported may be defined.

According to the above content, compared with the glTF format, the target format provided in the embodiment defines a large number of newly added attributes to support implementation of a large number of functions or effects, as follows:
(1) being compatible with the standard glTF format, that is, supporting information records of scenes, nodes, meshes, materials, textures, and the like;
(2) supporting extensions of the standard glTF format, such as KHR_lights_punctualExtension, KHR_materials_unlit, KHR_materials_clearcoat, and other official material extensions, and the description being more detailed;
(3) supporting official function extensions such as light import and export in the standard glTF format, and the description being more detailed;
(4) supporting camera import and export to add additional specific data required for rendering, but still retaining the support for the camera in the standard glTF format, so that it can be used by standard glTF tools;
(5) supporting colliders, such as spheres, cubes, cylinders, and capsules;
(6) supporting import and export extensions of custom material types;
(7) supporting export of bone skin data;
(8) supporting mesh deformation of expression transformations, which may be used for transformations of Avatar facial expression capture;
(9) supporting animations, including transformations of spatial positions (positions, rotations, sizes) of objects and expression transformations;
(10) supporting the recording of human skeleton data for common humanoid animation and motion capture;
(11) supporting cloth changing;
(12) supporting audio;
(13) adding URL data export;
(14) supporting streaming video playing and URL referencing of various external resources (including network files, streaming media, and local files);
(15) supporting metadata management and the like, to determine for which purpose the model may be used, for example, whether the model is allowed to be used in mildly pornographic or violent activities;
(16) supporting mixed output of expressions;
(17) supporting the story timeline, the mixing of various animations may be implemented based on the timeline, including animation, sound, expression control, object visibility, material parameters, and the like;
(18) supporting skybox;
(19) supporting post-processing;
(20) supporting bone dynamics (a hair and cloth physical system);
(21) supporting making of paint and decals;
(22) supporting mesh-based text display;
(23) supporting Draco, Draco being an open source mesh compression standard;
(24) supporting cubemaps;
(25) supporting sprites for 2D rendering or UI;
(26) supporting lightmaps; and
(27) supporting the event system.

To make the advantages of the present application clearer, a comparison between the VRM format and the target format is provided below.

The virtual reality modeling (VRM) is also a 3D file format developed based on glTF. A VRM file allows all supported applications to run the same virtual avatar data (3D model).

As a new format developed based on the glTF format, the target format has the following advantages compared with the VRM format:
It is compatible with the glTF format, may be used in various game engines and WebGL, and may be opened and edited by professional design software (such as Maya, Blender, C4D, etc.).

It supports scene export, animation, multimedia, skybox, mesh compression, customization of material parameters and script parameters, etc., and the functionality can be continuously extended.

It is cross-platform and cross-tool and supports version compatibility. One file is compatible with all devices. All needed is to have Runtime. It is not affected by the engine version and the target operating device. It is very suitable as an exchange medium to be put on the store shelves to create an ecology.

The materials may be selected by users, standard specifications of the users may be established, and it includes code generation tools, which can meet the requirements of rapid transformations.

Components or logics at the client may be customized flexibly based on services, and these data may be exported as files. For example, the application VR Kanojo may be placed in a file and loaded by the program framework instead of independently generating applications, which is convenient for long-term service development and ecological construction.
For details, see Table 20 below.

**Table 20**

| **Function** | **VRM** | **target format** |
|---|---|---|
| Rendering function | Supports only MToon, Unlit, and PBR, and does not support customization of material parameters. | Supports MToon, PBR, ZeldaShader, and other cartoon rendering shaders, and will support import of more shaders. |
| | | Supports cubemaps. |
| | Does not support cubemaps. | Supports storage of maps with a plurality of sets of variants, materials, and sounds, and a plurality of sets of materials of different styles, which may be switched freely. |
| | | Supports post-processing effects, such as bloom (glow), ambient light occlusion, depth of field, motion blurring, etc. |
| Animation function | Does not support animation storage. | Supports serialization and deserialization of standard bone animations and expression transformation animations. Supports skin and blendshape. |
| Facial capture function | Has a fixed number of expression restrictions, fewer controllable parameters for facial capture, and lower flexibility. Cannot be redeveloped, and there are relatively large limitations to self-developed facial capture. | Compatible with existing expressions of VRM, and can recognize expressions reserved in the model, thereby increasing parameters available for facial capture, and improving the flexibility of face capture. |
| | | Can be redeveloped, compatible with the requirements of facial capture, and can expose facial capture parameters for adjustment by users. Can be bound to playing sound and special effects and other effects to improve the live streaming effect. |
| Physical function | Uses open source SpringBone, with less parameters, poor effect, poor performance, and does not support multi-role interaction. Unable to interact with objects in a scene. | Use self- developed physics, which has rich parameters, good effect, outstanding performance, and supports multi-role interaction. |
| | | Can interact with objects in a scene. Compatible with existing effects of springBone. |
| Scene import and export | Not supported. | Supports import of scenes. Supports cameras/colliders/reflection probes/lighting/skybox/post-processing/decals/lightmaps. |
| | | Supports a single file containing a plurality of scenes, which may be loaded progressively. |
| | | Supports import of mixed scenes of scenes+characters. |
| Others | Unable to be redeveloped independently. | Can flexibly support more capabilities according to various requirements. |
| | Uses the non-standard glTF format, and cannot be opened in engines that support the glTF format. | Developed based on the extension field of the standard glTF format, and can be previewed and edited in tools that support the glTF format. |
| | Third parties cannot add functions. Does not support encryption. | Can adapt to future service changes and provide targeted import fields based on existing functional changes (such as motion capture and audience interaction). |
| | Does not support compression of files as a whole. | Files may be split into images, binary files, and JSON files for quick editing and adjustment, and can alternatively be provided as a single file. Capable of providing the encryption/decryption function. |
| | | Supports recompression of files as a whole. |
| | | Compatible with the existing functions of VRM. |

### Embodiment 2

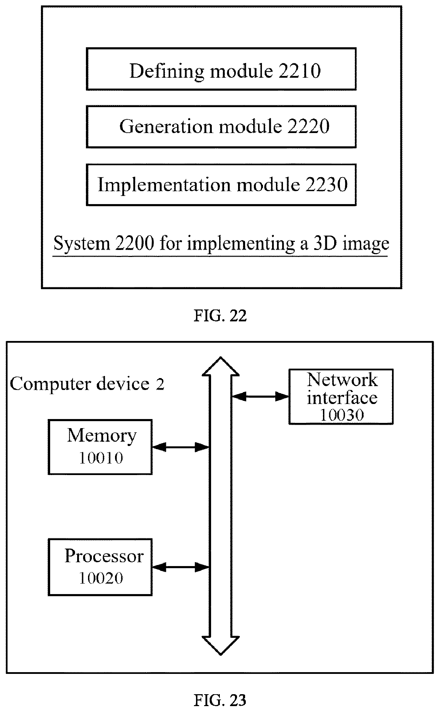

FIG. 22 is a block diagram schematically showing a system for implementing a 3D image according to Embodiment 2 of the present application. The system for implementing a 3D image may be divided into one or more program means, and the one or more program means are stored in a storage medium and executed by one or more processors, to implement the embodiments of the present application. The program means referred to in the embodiments of the present application refer to a series of computer-readable instruction segments that can complete a specific function. The functions of various program means in the embodiments will be specifically described in the following descriptions. As shown in FIG. 22, the system 2200 for implementing a 3D image may include a defining means 2210, a generation means 2220, and an implementation means 2230, where
the defining means 2210 is configured to define a newly added attribute in an attribute extension field of a target formatted file associated with a target format compatible with glTF format, where the target format is obtained by defining extension field information of the glTF format;
the generation means 2220 is configured to generate a 3D image based on the target formatted file; and
the implementation means 2230 is configured to implement, based on the newly added attribute in the target formatted file, a newly added effect/function supported by the 3D image.

In an optional embodiment, the newly added attribute includes:
an attribute defined in the extension field to be pointed to by a node;
an attribute defined in the extension field, to which no node points; and/or
an attribute defined in a node.

In an optional embodiment, the defining means 2210 is further configured to: define an audio file attribute in the attribute extension field to be pointed to by a node, where the audio file attribute is used to provide file information of an audio segment for restoration of the audio segment.

In an optional embodiment, the audio file attribute includes:
a uniform resource identifier used to indicate an index position of the audio file;
a media resource type used to indicate a supported audio format; and
a buffer view used to indicate an index position of the audio segment,
where if the target formatted file is exported as a .gltf file, the uniform resource identifier provides the index position; or if the target formatted file is exported as a .glb file, the buffer view provides the index position.

In an optional embodiment, the defining means 2210 is further configured to: define an audio behavior attribute in the attribute extension field,
where the audio behavior attribute includes one or more playing parameters for controlling playing of the audio segment.

In an optional embodiment, the defining means 2210 is further configured to: define an expression transformation attribute in the attribute extension field to be pointed to by a node,
where the expression transformation attribute includes material information and expression file information used to set a mesh blend shape.

In an optional embodiment, the defining means 2210 is further configured to: define a collider attribute in the attribute extension field to be pointed to by a node,
where the collider attribute includes one or more parameters for a collider that are used to support collision interaction.

In an optional embodiment, the defining means 2210 is further configured to: defining a humanoid bone attribute in the attribute extension field of the node to be pointed to by the node,
where the humanoid bone attribute includes parameters of a plurality of humanoid bones and a relationship and action constraints between the humanoid bones.

In an optional embodiment, the defining means 2210 is further configured to: define a cloth changing attribute in the attribute extension field of the node to be pointed to by the node,
where the cloth changing attribute includes a list of different cloth changing solutions and a material parameter list of each cloth changing solution.

In an optional embodiment, the defining means 2210 is further configured to: defining a lightmap attribute in the attribute extension field,
where the lightmap attribute is used to instruct an engine to pre-calculate a change in brightness of surfaces in a scene.

In an optional embodiment, the defining means 2210 is further configured to: define a metadata attribute in the attribute extension field,
where the metadata attribute includes resource description information, resource management information, and legal information and/or content reference information.

In an optional embodiment, the defining means 2210 is further configured to: define a bone dynamics attribute in the attribute extension field to be pointed to by a node, where the bone dynamics attribute is used to support simulating dynamic motion of an object to which bones are bound.

In an optional embodiment, the defining means 2210 is further configured to: define a post-processing attribute in the attribute extension field,
where the post-processing attribute includes an attribute of a volume component and an attribute of a supported post-processing effect.

In an optional embodiment, the defining means 2210 is further configured to: define a dynamic script attribute in the attribute extension field,
where the dynamic script attribute includes a character string to be executed by an engine to support interpreting and running of an external script.

In an optional embodiment, the defining means 2210 is further configured to: define a rendering attribute for a scene in the attribute extension field,
where the rendering attribute for the scene includes one or more rendering effect parameters for affecting the scene.

In an optional embodiment, the defining means 2210 is further configured to: define a skybox attribute in the attribute extension field,
where the skybox attribute is used to instruct an engine to create a background to color a material to be pointed to.

In an optional embodiment, the defining means 2210 is further configured to: defining a cubemap attribute in the attribute extension field which is used as a map type to be pointed to in a material,
where the cubemap attribute includes a layout, texture mapping, and texture of each side of a cubemap.

In an optional embodiment, the defining means 2210 is further configured to: defining a story timeline attribute in the attribute extension field to be pointed to by the node,
where the story timeline attribute is used to arrange a track of an object and create a cutscene and a game sequence.

In an optional embodiment, the defining means 2210 is further configured to: define a sprite attribute in the attribute extension field to be pointed to by a node,
where the sprite attribute includes a layout, texture reference, a texture position, a border, a physical shape and/or a spatial position.

In an optional embodiment, the target formatted file includes a node.

The defining means 2210 is further configured to:
define a streaming media attribute in the node,
where the streaming media attribute includes a URL name, a URL address, and a streaming media format of streaming media.

In an optional embodiment, the target formatted file includes a node.

The defining means 2210 is further configured to:
define a resource variable attribute in the node,
where the resource variable attribute includes a variable type and a set of indexes pointing to reference fields to support the use of resources.

In an optional embodiment, the defining means 2210 is further configured to: define an import mode and an export mode,
where the export mode is used to define an export of a provided material parameter and/or an export of a provided component parameter.

In an optional embodiment, the defining means 2210 is further configured to: define some non-common parameters in an attribute extras field which is mounted to a node or mounted under an object.

### Embodiment 3

FIG. 23 is a schematic diagram schematically showing a hardware architecture of a computer device 2 adapted to implement a method for implementing a 3D image according to Embodiment 3 of the present application. In this embodiment, the computer device 2 is a device that can automatically perform numerical calculation and/or information processing according to preset or prestored instructions. For example, the computer device may be a smartphone, a tablet device, a laptop computer, a virtual machine, or the like. As shown in FIG. 23, the computer device 2 at least includes, but is not limited to: a memory 10010, a processor 10020, and a network interface 10030, which may be communicatively linked to each other by using a system bus,

The memory 10010 includes at least one type of computer-readable storage medium, and the readable storage medium includes a flash memory, a hard disk, a multimedia card, a card-type memory (for example, an SD or DX memory), a random access memory (RAM), a static random access memory (SRAM), a read-only memory (ROM), an electrically erasable programmable read-only memory (EEPROM), a programmable read-only memory (PROM), a magnetic memory, a magnetic disk, an optical disc, and the like. In some embodiments, the memory 10010 may be an internal storage means of the computer device 2, for example, a hard disk or memory of the computer device 2. In some other embodiments, the memory 10010 may alternatively be an external storage device of the computer device 2, for example, a plug-in type hard disk equipped on the computer device 2, a smart media card (SMC for short), a secure digital (SD for short) card, or a flash card. Certainly, the memory 10010 may alternatively include both the internal storage means of the computer device 2 and the external storage device of the computer device. In this embodiment, the memory 10010 is generally configured to store an operating system and various types of application software installed on the computer device 2, such as program code for the method for implementing a 3D image. In addition, the memory 10010 may be further configured to temporarily store various types of data that have been output or are to be output.

The processor 10020 may be, in some embodiments, a central processing unit (CPU for short), a controller, a microcontroller, a microprocessor, or other data processing chips. The processor 10020 is generally configured to control overall operation of the computer device 2, for example, execute control, processing, and the like related to data exchange or communication with the computer device 2. In this embodiment, the processor 10020 is configured to run program code stored in the memory 10010 or to process data.

The network interface 10030 may include a wireless network interface or a wired network interface. The network interface 10030 is generally configured to establish a communication link between the computer device 2 and other computer devices. For example, the network interface 10030 is configured to connect the computer device 2 to an external terminal by using a network, and establish a data transmission channel, a communication link, and the like between the computer device 2 and the external terminal. The network may be a wireless or wired network, such as Intranet, Internet, the Global System for Mobile Communications (GSM for short), wideband code division multiple access (WCDMA for short), a 4G network, a 5G network, Bluetooth, or Wi-Fi.

It should be noted that FIG. 23 shows only a computer device having components 10010 to 10030, but it should be understood that not all of the illustrated components are required to be implemented, and more or fewer components may be implemented instead.

In this embodiment, the method for implementing a 3D image stored in the memory 10010 may alternatively be divided into one or more program means and executed by one or more processors (the processor 10020 in this embodiment) to implement the embodiments of the present application.

### Embodiment 4

The present application further provides a computer-readable storage medium storing computer-readable instructions, where when the computer-readable instructions are executed by a processor, the following steps are implemented:
defining a newly added attribute in an attribute extension field of a target formatted file, the target formatted file being associated with a target format compatible with the glTF format, and the target format being obtained by defining extension field information of the glTF format;
generating a 3D image based on the target formatted file; and
implementing, based on the newly added attribute of the target formatted file, a newly added effect/function supported by the 3D image.

In this embodiment, the computer-readable storage medium includes a flash memory, a hard disk, a multimedia card, a card-type memory (for example, an SD or DX memory), a random access memory (RAM), a static random access memory (SRAM), a read-only memory (ROM), an electrically erasable programmable read-only memory (EEPROM), a programmable read-only memory (PROM), a magnetic memory, a magnetic disk, an optical disc, and the like. In some embodiments, the computer-readable storage medium may be an internal storage unit of the computer device, for example, a hard disk or memory of the computer device. In some other embodiments, the computer-readable storage medium may alternatively be an external storage device of the computer device, for example, a plug-in type hard disk equipped on the computer device, a smart media card (SMC for short), a secure digital (SD for short) card, or a flash card. Certainly, the computer-readable storage medium may alternatively include both the internal storage unit of the computer device and the external storage device of the computer device. In this embodiment, the computer-readable storage medium is generally configured to store an operating system and various types of application software installed on the computer device, such as program code for the method for implementing a 3D image in the embodiments. In addition, the computer-readable storage medium may be configured to temporarily store various types of data that have been output or are to be output.

It will be apparent to those skilled in the art that the various means or steps in the embodiments of the present application can be implemented by a general-purpose computing apparatus that can be centralized on a single computing apparatus or distributed across a network formed by a plurality of computing apparatuses. Optionally, they may be implemented by program code executable by the computing apparatus, such that they may be stored in a storage apparatus and executed by the computing apparatus, and in some cases, the steps shown or described may be performed in a sequence different from the sequence described herein, or they may be respectively fabricated into individual integrated circuit means, or a plurality of means or steps thereof may be implemented as a single integrated circuit means. In this way, the embodiments of the present application are not limited to any specific combination of hardware and software.

It should be noted that the foregoing descriptions are merely preferred embodiments of the present application, and are not intended to limit the patent scope of the present application. Any transformation of equivalent structures or equivalent processes that is made using the contents of the description and accompanying drawings of the present application, or any direct or indirect application thereof in other related technical fields shall equally fall within the patent protection scope of the present application.

## Claims

1. A method for implementing a 3D image, comprising:
defining a newly added attribute in an attribute extension field of a target formatted file associated with a target format compatible with glTF format, wherein the target format is obtained by defining extension field information of the glTF format;
generating a 3D image based on the target formatted file; and
implementing, based on the newly added attribute in the target formatted file, a newly added effect/function supported by the 3D image.

2. The method for implementing a 3D image according to claim 1, wherein the newly added attribute comprises:
an attribute defined in the extension field to be pointed to by a node;
an attribute defined in the extension field, to which no node points; and/or
an attribute defined in a node.

3. The method for implementing a 3D image according to claim 1 or 2, wherein defining the newly added attribute in the attribute extension field of the target formatted file comprises:
defining an audio file attribute in the attribute extension field to be pointed to by a node,
wherein the audio file attribute is used to provide file information of an audio segment for restoration of the audio segment.

4. The method for implementing a 3D image according to claim 3, wherein the audio file attribute comprises:
a uniform resource identifier used to indicate an index position of an audio file;
a media resource type used to indicate a supported audio format; and
a buffer view used to indicate an index position of the audio segment,
wherein if the target formatted file is exported as a .gltf file, the uniform resource identifier provides the index position; or if the target formatted file is exported as a .glb file, the buffer view provides the index position.

5. The method for implementing a 3D image according to claim 3 or 4, wherein defining the newly added attribute in the attribute extension field of the target formatted file further comprises:
defining an audio behavior attribute in the attribute extension field,
wherein the audio behavior attribute comprises one or more playing parameters for controlling playing of the audio segment.

6. The method for implementing a 3D image according to any one of claims 1 to 5, wherein defining the newly added attribute in the attribute extension field of the target formatted file comprises:
defining an expression transformation attribute in the attribute extension field to be pointed to by a node,
wherein the expression transformation attribute comprises material information and expression file information used to set a mesh blend shape.

7. The method for implementing a 3D image according to any one of claims 1 to 6, wherein defining the newly added attribute in the attribute extension field of the target formatted file comprises:
defining a collider attribute in the attribute extension field to be pointed to by a node,
wherein the collider attribute comprises one or more parameters for a collider that are used to support collision interaction.

8. The method for implementing a 3D image according to any one of claims 1 to 7, wherein defining the newly added attribute in the attribute extension field of the target formatted file comprises:
defining a humanoid bone attribute in the attribute extension field of the node to be pointed to by the node,
wherein the humanoid bone attribute comprises parameters of a plurality of humanoid bones and a relationship and action constraints between the humanoid bones.

9. The method for implementing a 3D image according to any one of claims 1 to 8, wherein defining the newly added attribute in the attribute extension field of the target formatted file comprises:
defining a cloth changing attribute in the attribute extension field of the node to be pointed to by the node,
wherein the cloth changing attribute includes a list of different cloth changing solutions and a material parameter list of each cloth changing solution.

10. The method for implementing a 3D image according to any one of claims 1 to 9, wherein defining the newly added attribute in the attribute extension field of the target formatted file comprises:
defining a lightmap attribute in the attribute extension field,
wherein the lightmap attribute is used to instruct an engine to pre-calculate a change in brightness of surfaces in a scene.

11. The method for implementing a 3D image according to any one of claims 1 to 10, wherein defining the newly added attribute in the attribute extension field of the target formatted file comprises:
defining a metadata attribute in the attribute extension field,
wherein the metadata attribute comprises resource description information, resource management information, and legal information and/or content reference information.

12. The method for implementing a 3D image according to any one of claims 1 to 11, wherein defining the newly added attribute in the attribute extension field of the target formatted file comprises:
defining a bone dynamics attribute in the attribute extension field to be pointed to by a node,
wherein the bone dynamics attribute is used to support simulating dynamic motion of an object to which bones are bound.

13. The method for implementing a 3D image according to any one of claims 1 to 12, wherein defining the newly added attribute in the attribute extension field of the target formatted file comprises:
defining a post-processing attribute in the attribute extension field,
wherein the post-processing attribute comprises an attribute of a volume component and an attribute of a supported post-processing effect.

14. The method for implementing a 3D image according to any one of claims 1 to 13, wherein defining the newly added attribute in the attribute extension field of the target formatted file comprises:
defining a dynamic script attribute in the attribute extension field,
wherein the dynamic script attribute comprises a character string to be executed by an engine to support interpreting and running of an external script.

15. The method for implementing a 3D image according to any one of claims 1 to 14, wherein defining the newly added attribute in the attribute extension field of the target formatted file comprises:
defining a rendering attribute for a scene in the attribute extension field,
wherein the rendering attribute for the scene comprises one or more rendering effect parameters for affecting the scene.

16. The method for implementing a 3D image according to any one of claims 1 to 15, wherein defining the newly added attribute in the attribute extension field of the target formatted file comprises: defining a skybox attribute in the attribute extension field,
wherein the skybox attribute is used to instruct an engine to create a background to color a material to be pointed to.

17. The method for implementing a 3D image according to any one of claims 1 to 16, further comprising:
defining a cubemap attribute in the attribute extension field, which is used as a map type to be pointed to in a material,
wherein the cubemap attribute comprises a layout, texture mapping, and texture of each side of a cubemap.

18. The method for implementing a 3D image according to any one of claims 1 to 17, wherein defining the newly added attribute in the attribute extension field of the target formatted file comprises:
defining a story timeline attribute in the attribute extension field to be pointed to by a node,
wherein the story timeline attribute is used to arrange a track of an object and create a cutscene and a game sequence.

19. The method for implementing a 3D image according to any one of claims 1 to 18, wherein defining the newly added attribute in the attribute extension field of the target formatted file comprises:
defining a sprite attribute in the attribute extension field to be pointed to by a node,
wherein the sprite attribute comprises a layout, texture reference, a texture position, a border, a physical shape and/or a spatial position.

20. The method for implementing a 3D image according to any one of claims 1 to 19, wherein the target formatted file comprises a node; and
the method further comprises:
defining a streaming media attribute in the node,
wherein the streaming media attribute comprises a URL name, a URL address, and a streaming media format of streaming media.

21. The method for implementing a 3D image according to any one of claims 1 to 20, wherein the target formatted file comprises a node; and
the method further comprises:
defining a resource variable attribute in the node,
wherein the resource variable attribute comprises a variable type and a set of indexes pointing to reference fields to support the use of resources.

22. The method for implementing a 3D image according to any one of claims 1 to 21, further comprising:
defining an import mode and an export mode,
wherein the export mode is used to define an export of a provided material parameter and/or an export of a provided component parameter.

23. The method for implementing a 3D image according to any one of claims 1 to 22, further comprising:
defining some non-common parameters in an attribute extras field which is mounted to a node or mounted under an object.

24. A system for implementing a 3D image, comprising:
a defining means configured to define a newly added attribute in an attribute extension field of a target formatted file associated with a target format compatible with glTF format, wherein the target format is obtained by defining extension field information of the glTF format;
a generation means configured to generate a 3D image based on the target formatted file; and
an implementation means configured to implement, based on the newly added attribute in the target formatted file, a newly added effect/function supported by the 3D image.

25. A computer device, comprising a memory, a processor, and computer-readable instructions stored on the memory and capable of running on the processor, wherein when the processor executes the computer-readable instructions, the steps of the method for implementing a 3D image according to any one of claims 1 to 23 are implemented.

26. A computer-readable storage medium having computer-readable instructions stored thereon, wherein when executed by at least one processor, the computer-readable instructions cause the at least one processor to perform the steps of the method for implementing a 3D image according to any one of claims 1 to 23.
